# EUROPEAN PATENT APPLICATION

(11) **EP 3 977 867 A1**
(43) Date of publication of application: **06.04.2022**
(21) Application number: 19931445.1
(22) Date of filing: 01.11.2019
(51) Int. Cl.: A23L 33/105, A23L 2/00, A23L 2/52

(54) **BEVERAGE CONTAINING 1-DEOXYNOJIRIMYCIN**

(30) Priority: 29.05.2019 JP 2019100250
(71) Applicant: Suntory Holdings Limited, Osaka 530-8203 (JP)
(72) Inventor: NAKATA, Aki, Kawasaki-shi, Kanagawa 211-0067 (JP); MATSUBAYASHI, Hideki, Kawasaki-shi, Kanagawa 211-0067 (JP)
(74) Representative: Vossius & Partner Patentanwälte Rechtsanwälte mbB
(86) International application number: PCT/JP2019/042994
(87) International publication number: WO 2020/240887

(57) **Abstract**

An object of the present invention is to provide a packaged beverage that comprises high concentrations of 1-deoxynojirimycin but has a pleasant aftertaste.

Magnesium and/or calcium is added at a concentration of from 0.05 to 15 mg/100 mL to a packaged beverage comprising 1-deoxynojirimycin at a concentration of from 0.1 to 0.75 mg per 100 mL of the beverage and having a soluble solids concentration of not more than 2.0.

## Description

### TECHNICAL FIELD

The present invention relates to a beverage comprising 1-deoxynojirimycin, and particularly to a beverage that is less apt to make one feel the characteristic harsh aftertaste coming from 1-deoxynojirimycin.

### BACKGROUND ART

1-Deoxynojirimycin is an iminosugar found in mulberry leaves or other plants, and is reported to be capable of suppressing the elevation of blood glucose levels. In recent years, the physiological activity of mulberry leaves has been focused, and various reports have been published regarding foods and beverages incorporating a mulberry leaf extract. For example, there have been reports on a health food comprising a mixture of mulberry leaf and agaricus extracts (PTL 1), and on a composition comprising a seaweed extract and extracts from medicinal herbs and trees including mulberry leaves (PTL 2). Also, it is known that sugar-mimic alkanoids such as 1-deoxynojirimycin have a disadvantage in that when they are added to foods and beverages, they may deteriorate the flavor of the foods and beverages (PTL 3).

Meanwhile, with regard to beverages having an aroma improved by addition of magnesium, PTL 4 discloses the improvement of the aftertaste of lactic acid, and PTL 5 discloses a clear and colorless beverage that is less apt to make one feel the sweetness coming from inulin.

### CITATION LIST

### PATENT LITERATURES

PTL 1: Japanese Unexamined Patent Application Publication No. JP 2001-213796
PTL 2: Japanese Unexamined Patent Application Publication No. JP 2006-36681
PTL 3: Japanese Unexamined Patent Application Publication No. JP H09-140351
PTL 4: Japanese Unexamined Patent Application Publication No. JP 2018-99106
PTL 5: Japanese Unexamined Patent Application Publication No. JP 2018-77729

### SUMMARY OF INVENTION

### TECHNICAL PROBLEM

In recent years, flavored water has gained popularity against the backdrop of the rise in consumers' health consciousness and natural preference. Flavored water is a beverage with moderate sweetness produced by adding ingredients such as flavorant, essence, and/or fruit juice to water, and is also called "near-water". Those beverages like flavored water generally have such a clean taste and are characterized by being as easy to drink as or easier to drink than water. However, the present inventors have made studies on the utilization of 1-deoxynojirimycin in beverages, and found that when 1-deoxynojirimycin is added to those beverages with a clean taste, such as flavored water, the unpleasant rough feeling coming from 1-deoxynojirimycin ringers on the tongue, leading to deterioration of the palatability of the beverages. This unpleasant rough feeling, which is also referred to herein as "harsh aftertaste", has a different meaning from "bitterness", "astringency" or "harshness".

Therefore, an object of the present invention is to provide a beverage characterized in that the harsh aftertaste coming from 1-deoxynojirimycin is reduced.

### SOLUTION TO PROBLEM

The present inventors have made intensive studies to achieve the aforementioned object and, as a result, found that addition of a specified amount of magnesium and/or calcium has a superior effect in improving the harsh aftertaste coming from 1-deoxynojirimycin in a beverage. The inventors found that by adjusting the magnesium content and/or calcium content in a beverage to be within a specified range, the harsh aftertaste coming from 1-deoxynojirimycin is reduced, enabling production of a beverage with a pleasant aftertaste. Thus, the inventors have completed the present invention.

This invention is directed, but not limited, to the following.
(1) A beverage comprising 0. 1 to 0.75 mg/100 mL of 1-deoxynojirimycin and 0.05 to 15 mg/100 mL of magnesium and/or calcium, and having a soluble solids concentration of not more than 2.0.
(2) The beverage as set forth in (1), wherein the beverage is a packaged beverage.

### ADVANTAGEOUS EFFECTS OF INVENTION

According to the present invention, there can be provided a beverage that comprises 1-deoxynojirimycin but has a pleasant aftertaste.

### DESCRIPTION OF EMBODIMENTS

One embodiment of the present invention is directed to a beverage comprising 0.1 to 0.75 mg/100 mL of 1-deoxynojirimycin and 0.05 to 15 mg/100 mL of magnesium and/or calcium, and having a soluble solids concentration of not more than 2.0.

### (1-Deoxynojirimycin)

1-Deoxynojirimycin, which is an iminosugar found in mulberry leaves or the like, is also called moranoline or 1,5-dideoxy-1,5-imino-D-glucitol, and is assigned CAS Registry No. 19130-96-2.

The beverage of the present invention comprises 0.1 to 0.75 mg/100 mL of 1-deoxynojirimycin. When a beverage has a 1-deoxynojirimycin content of not less than 0.1 mg/100 mL, the harsh aftertaste coming from 1-deoxynojirimycin is felt, but according to this invention, this harsh aftertaste can be suppressed. The beverage of this invention has a 1-deoxynojirimycin content of preferably not less than 0.15 mg/100 mL, more preferably not less than 0.2 mg/100 mL.

In contrast, when the beverage of the present invention has a 1-deoxynojirimycin content of more than 0.75 mg/100 mL, the harsh aftertaste of 1-deoxynojirimycin may become too intense so that the action and effect of this invention may not be adequately exhibited. From this viewpoint, it is preferred that the upper limit of the 1-deoxynojirimycin content in the beverage of this invention should be not more than 0.7 mg/100 mL, more preferably not more than 0.6 mg/100 mL, still more preferably not more than 0.5 mg/100 mL. The 1-deoxynojirimycin content in the beverage can be measured by using, for example, high-performance liquid chromatography (HPLC).

The 1-deoxynojirimycin used in the present invention is not limited to those extracted or isolated from a mulberry plant or other plants. Substances produced by chemical synthesis or fermentation, or products produced by bacteria may also be used. In this invention, 1-deoxynojirimycin can be used in the form of a pure product or a plant extract. Examples of commercially available products of 1-deoxynojirimycin include the product sold by FUJIFILM Wako Pure Chemical Corporation.

In the present invention, the plant extract containing 1-deoxynojirimycin can be used in the form of a plant extract from a mulberry plant or other plants. Examples of mulberry plants that can be used include *Morus bombycis* Koidzumi, *Morus alba* L., *Morus australis* Poir, *Morus latifolia* Poir., *Morus mongolica* Schneid, *Morus nigra* L., *Morus rubra* L., and *Morus boninensis* Koidzumi, and any hybrids or variants thereof can also be used. The site of the plant to be used is not limited in any way -- leaves, branches, sprouts, barks, trunks, roots, root barks, flowers, syncarps and the like can be used. Examples of mulberry plant extracts include, but are not limited to, the mulberry leaf extract powder, sterilized mulberry leaf powder and the like produced by Toyotama Healthy Food Co., Ltd.

In the case of using a plant extract, it is preferable to use a plant extract with increased concentration of 1-deoxynojirimycin, because the object to be achieved by the present invention becomes prominent. The following presents an exemplary method for obtaining a mulberry leaf extract containing 1-deoxynojirimycin. First, an alcohol such as hydrous ethanol is added to a dry product of mulberry leaves to obtain an extract. Since 1-deoxynojirimycin is present only at low concentrations (about 0.1-0.2% by weight) in dry mulberry leaves, extraction with an alcohol is preferred to achieve efficient extraction. The obtained liquid extract is treated in a centrifuge to remove insolubles, and is then vacuum concentrated to obtain a mulberry leaf extract. The thus-obtained mulberry leaf extract generally contains 1-deoxynojirimycin at a concentration of from 0.4 to 1% by weight.

### (Magnesium)

In one embodiment, the beverage of the present invention comprises 0.05 to 15 mg/100 mL of magnesium. When the magnesium content falls within the aforementioned range, the harsh aftertaste coming from 1-deoxynojirimycin can be effectively reduced. Also, when the magnesium content falls within the aforementioned range, the beverage can maintain its palatability, such as clean taste and refreshing flavor. Since magnesium is known as a mineral having bitterness, it is surprising that the harsh aftertaste coming from 1-deoxynojirimycin can be suppressed using magnesium.

In the present invention, it is preferred from the viewpoint of aroma that the beverage should have a magnesium content of not more than 13 mg/100 mL, more preferably not more than 11 mg/100 mL, still more preferably not more than 9 mg/100 mL. Also, from the viewpoint that the effect of this invention can be prominently exhibited, it is preferred that the beverage should have a magnesium content of not less than 0.1 mg/100 mL, more preferably not less than 0.3 mg/100 mL.

When the magnesium used in the present invention is in the form of a salt, the magnesium content in the beverage can be calculated in terms of the content of its free form. In this invention, the magnesium content in the beverage can be measured by a known technique using an ICP optical emission spectrometer (ICPAES).

Examples of magnesium sources include, but are not limited to, the following: sulfates, citrates, gluconates, lactates, bisglycinates, amino acid chelates, carbonates, oxides, hydroxides, chlorides, phosphates, pyrophosphates, acetates, fumarates, and malates. Preferred examples of magnesium salts used in this invention are magnesium sulfates, magnesium chlorides, and magnesium gluconates. Also, magnesium sources derived from natural resources may be used. Specific examples thereof include mineral water.

### (Calcium)

In one embodiment, the beverage of the present invention comprises 0.05 to 15 mg/100 mL of calcium. Calcium is known as a mineral having a complex taste that combines bitterness and saltiness. In a preferred embodiment of this invention, the harsh aftertaste coming from 1-deoxynojirimycin can be improved more effectively by combined use of magnesium and calcium.

In the present invention, it is preferred from the viewpoint of aroma that the beverage should have a calcium content of not more than 13 mg/100 mL, more preferably not more than 11 mg/100 mL, still more preferably not more than 9 mg/100 mL. Also, from the viewpoint that the effect of this invention can be prominently exhibited, it is preferred that the beverage should have a calcium content of not less than 0.1 mg/100 mL, more preferably not less than 0.3 mg/100 mL.

When the calcium used in the present invention is in the form of a salt, the calcium content in the beverage can be calculated in terms of the content of its free form. In this invention, the calcium content in the beverage can be measured by a known technique using an ICP optical emission spectrometer (ICPAES).

In the case of combined use of magnesium and calcium, the two components can be used at a concentration within the aforementioned range. However, when the total concentration of magnesium and calcium is too high, the unpleasant tastes (*i.e.*, bitterness and a stimulating stiff sensation on the tongue) common to magnesium and calcium may be felt. Therefore, the total concentration of magnesium and calcium is preferably not more than 20 mg/100 mL, more preferably not more than 15 mg/100 mL, still more preferably not more than 13 mg/100 mL.

Examples of calcium sources include, but are not limited to, the following: sulfates, citrates, gluconates, lactates, bisglycinates, amino acid chelates, carbonates, oxides, hydroxides, chlorides, phosphates, pyrophosphates, acetates, fumarates, and malates. Preferred examples of calcium salts used in this invention are calcium sulfates, calcium citrate malate, calcium gluconates, calcium lactates, and calcium lactate gluconate. Also, calcium sources derived from natural resources may be used. Specific examples thereof include mineral water.

### (Soluble solids)

Beverages with a clean taste like flavored water are generally characterized by being relatively low in the amounts and types of other ingredients added besides water. Therefore, when an additional ingredient is added to such beverages, the beverages may easily lose the balance of flavor, so that it is difficult to suppress the harsh aftertaste of 1-deoxynojirimycin while maintaining the palatability of those beverages, such as clean taste and refreshing flavor.

According to the studies made by the present inventors, it is found that the harsh aftertaste of 1-deoxynojirimycin is more likely to become prominent in low-Brix beverages having a soluble solids concentration of not more than 2.0 than in beverages with higher Brix levels. From the viewpoint that the effect of this invention can be prominently exhibited, it is preferred that the beverage should have a soluble solids concentration of from 0 to 1.5, more preferably from 0 to 1.0, still more preferably from 0 to 0.5. In this invention, the soluble solids concentration is equivalent to a Brix value determined using a sugar content meter, refractometer, or the like. The Brix is a value obtained by converting a refractive index measured at 20°C into a mass/mass percentage of sucrose in solution based on the conversion table published by ICUMSA (the International Commission for Uniform Methods of Sugar Analysis) (expressed in unit of "°Bx", "%" or "degree").

The type of the beverage provided by the present invention is not particularly limited. The inventive beverage can be of any type, including soft drinks, nutritional beverages, functional beverages, and flavored water (near water) beverages. Further, the beverage of this invention can be a beverage containing no carbon dioxide gas or a beverage containing carbon dioxide gas.

### (Other components)

To the extent that there is no deviation from the intended object of the present invention, the packaged beverage of this invention may have other additives optionally added thereto alone or in combination, including antioxidant, pH adjustor, flavoring, pigment, emulsifier, preservative, seasoning, sweetener, acidulant, vitamin, essence, and quality stabilizer.

### (Packaged beverage)

The beverage of the present invention is a beverage characterized in that the harsh aftertaste of 1-deoxynojirimycin is reduced. Therefore, from the viewpoint of ease of handling for consumers, it is preferred that the beverage of this invention should be provided in a form that is storable at ordinary temperatures for a long period of time and is ready-to-drink (RTD), as a beverage intended for continuous consumption in hopes of the physiological activity of 1-deoxynojirimycin. From this viewpoint, a packaged beverage obtained through heat sterilization is one preferred embodiment of this invention.

The package used to make the packaged beverage of the present invention is not particularly limited, and can be any of commonly used packages. Preferred examples of resin packages include polyethylene terephthalate-based molded packages (so-called PET bottle). Other packages besides resin packages include metal can, paper packages combined with metallic foils or plastic films, and glass bottle. The beverage of this invention can be provided in a form packed and sealed in such a package. The volume of the beverage of this invention is not particularly limited, and is for example in the range of from 350 mL to 1000 mL, preferably from 500 mL to 1000 mL.

As described above, the present invention effectively suppresses the harsh aftertaste coming from 1-deoxynojirimycin. The harsh aftertaste becomes prominent particularly after heat sterilization. Therefore, in a preferred embodiment, the beverage of this invention is a heat sterilized, packaged beverage, since the effect of this invention can be particularly advantageously obtained. The heat sterilization conditions adopted in this invention can be, for example, those conditions having similar effects to those of the conditions stipulated in the Food Sanitation Act of Japan, and can be specifically set to the following conditions: at 60 to 150°C, preferably at 90 to 150°C, more preferably at 110 to 150°C, for 1 second to 60 minutes, preferably for 1 second to 30 minutes. When the beverage of this invention is produced using a heat-resistant package (*e*.*g*., metal can, glass bottle), the beverage can be subjected to retort sterilization (at 110 to 140°C for 1 minute to several tens of minutes).

When the beverage is produced using a non-heat-resistant package (*e.g.*, PET bottle, paper package), a prepared liquid, for example, can be first sterilized at high temperatures for a short period of time using a plate-type heat exchanger or the like (UHT sterilization at 110 to 150°C for 1 second to several tens of seconds), and then cooled to a specified temperature and packed in the package. As long as the packaged beverage of this invention is produced through heat sterilization under more intense conditions than those stipulated in the Food Sanitation Act of Japan, the intensity of the harsh aftertaste coming from 1-deoxynojirimycin does not change.

### EXAMPLES

Hereunder, the present invention will be specifically described in detail by reference to experimental examples, but this invention is not limited to these examples. Unless otherwise stated herein, all numerical ranges are inclusive of their endpoints.

### Analysis of 1-deoxynojirimycin

The 1-deoxynojirimycin content in beverage samples was analyzed using HPLC (high-performance liquid chromatography) performed under the conditions detailed below. Beverage samples were vacuum concentrated, if necessary, before analysis.
- Column: TSKgel Amide-80, ϕ4.6 mm × 250 mm, particle size 5 µm
- Mobile phase: Mixed solution of water, acetonitrile and acetic acid
- Flow rate: 1.0 mL/min.
- Column temperature: 40°C
- Ionization method: Electrospray ionization (positive ion detection mode)
- Mass-to-change ratio (m/z): 164.0 → 109.9

### Experiment 1: Preparation and evaluation of 1-deoxynojirimycin-containing beverages (reference examples)

Different packaged beverages were prepared by adding 1-deoxynojirimycin (produced by FUJIFILM Wako Pure Chemical Corporation; purity: 98%) to pure water so as to give such 1-deoxynojirimycin contents as shown in Table 1. All of the beverages had a Brix of not more than 0.5.

The prepared packaged beverages were subjected to sensory evaluation regarding harsh aftertaste by three panelists in the three-point scale from 1 to 3 points using sample No. 1-1 as a control. To be specific, the ratings given by each panelist according to the criteria detailed below were discussed again in a free-form manner among all the panelists, and the final ratings were assigned as integer values in consensus among them.
- 3 points: The harsh aftertaste is significantly intense as compared to that felt in the control.
- 2 points: The harsh aftertaste is relatively intense as compared to that felt in the control.
- 1 point: The harsh aftertaste is comparable to that felt in the control.

The results of the sensory evaluation are shown in Table 1. The harsh aftertaste of 1-deoxynojirimycin was felt intensely in packages beverages with a 1-deoxynojirimycin content of not less than 0.1 mg/100 mL.

**[Table 1]**

| Beverage sample | 1-1 | 1-2 | 1-3 | 1-4 | 1-5 |
|---|---|---|---|---|---|
| 1-Deoxynojirimycin content (mg/100ml) | 0 | 0.01 | 0.1 | 0.5 | 1 |
| Sensory rating | 1 | 1 | 2 | 3 | 3 |

### Experiment 2: Harsh aftertaste suppression effect of magnesium (1)

Different packaged beverages were prepared by adding 1-deoxynojirimycin (produced by FUJIFILM Wako Pure Chemical Corporation; purity: 98%) and magnesium sulfate (produced by FUJIFILM Wako Pure Chemical Corporation) to pure water so as to give such 1-deoxynojirimycin and magnesium contents as shown in Table 2. All of the beverages had a Brix of not more than 0.5.

The prepared packaged beverages were evaluated by three panelists in the five-point scale from 1 to 5 points. Each of the beverage samples was evaluated according to the criteria detailed below, based on the assumption that the harsh aftertaste felt in a comparative example which contained 1-deoxynojirimycin in the same amount as each working example but contained no magnesium was regarded as 1 point. The ratings given by each panelist were discussed again in a free-form manner among all the panelists, and the final ratings were assigned as integer values in consensus among them.
- 5 points: The harsh aftertaste is significantly improved.
- 4 points: The harsh aftertaste is improved.
- 3 points: The harsh aftertaste is improved to some degree.
- 2 points: The harsh aftertaste is almost not improved.
- 1 point: The harsh aftertaste is not improved at all.

The results of the sensory evaluation are shown in Table 2. When magnesium was added to beverages containing 1-deoxynojirimycin at concentrations of from 0.1 to 2.0 mg/100 mL, suppression of harsh aftertaste was achieved. The harsh aftertaste coming from 1-deoxynojirimycin was suppressed successfully merely by adopting the simple approach of adding magnesium to beverages containing high concentrations of 1-deoxynojirimycin. In sample No. 2-20, which had a 1-deoxynojirimycin content of 2.0 mg/100 mL, the harsh aftertaste characteristic of 1-deoxynojirimycin became too intense, so that the action and effect of the present invention were not adequately exhibited. In sample No. 2-10, which had a magnesium concentration of 20 mg/100 mL, reduction/suppression of harsh aftertaste was observed, but the unpleasant taste caused by magnesium was prominently felt leading to deterioration of the palatability of the beverage.

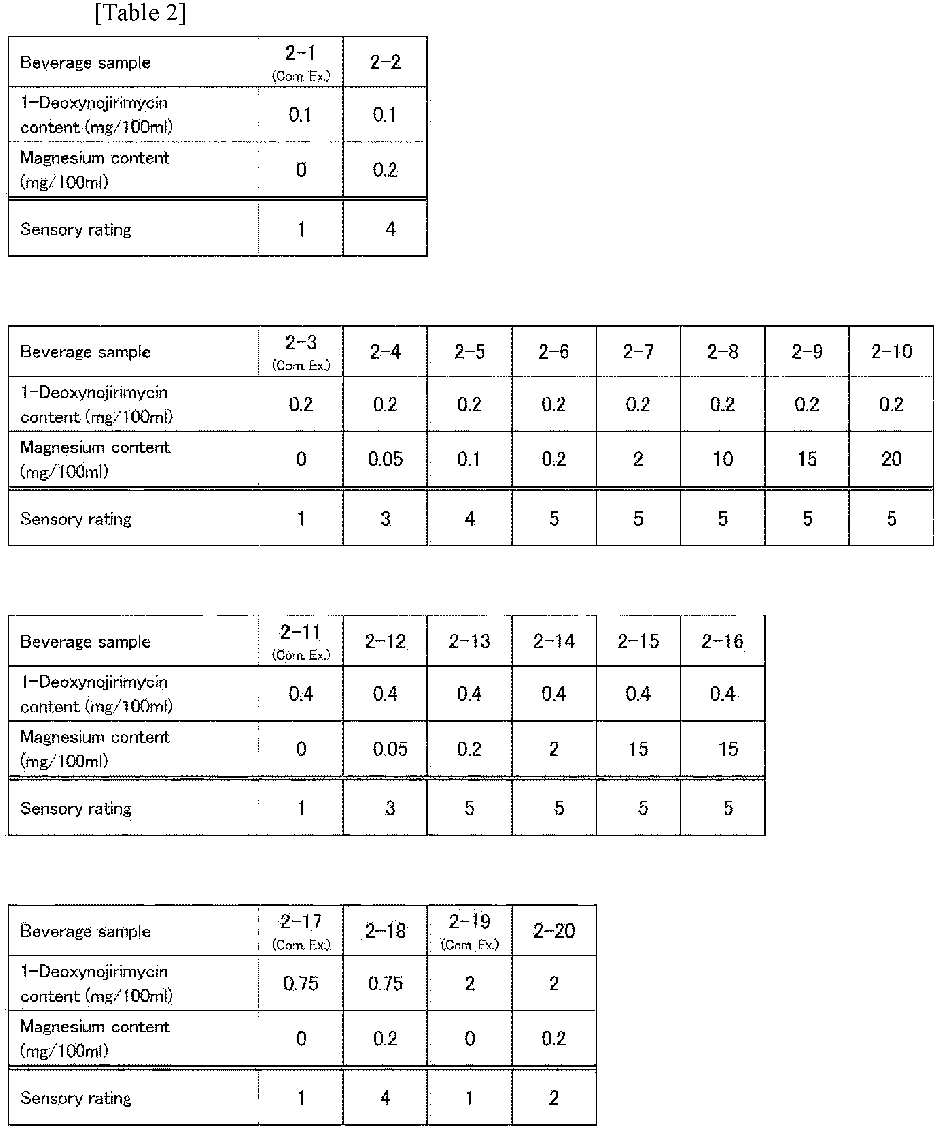

### Experiment 3: Harsh aftertaste suppression effect of magnesium (2)

Different packaged beverages were prepared by adding 1-deoxynojirimycin (produced by FUJIFILM Wako Pure Chemical Corporation; purity: 98%) and magnesium chloride hexahydrate (produced by FUJIFILM Wako Pure Chemical Corporation) to pure water so as to give such 1-deoxynojirimycin and magnesium contents as shown in Table 3. All of the beverages had a Brix of not more than 0.5.

The prepared packaged beverages were subjected to sensory evaluation by following the same procedure as in Experiment 2. The results of the sensory evaluation are shown in the table given below. When magnesium was added to beverages containing 1-deoxynojirimycin at concentrations of 0.2 mg and 0.4 mg per 100 mL, suppression of harsh aftertaste was achieved.

**[Table 3]**

| Beverage sample | 3-1 (Com. Ex.) | 3-2 | 3-3 | 3-4 | 3-5 (Com. Ex.) | 3-6 |
|---|---|---|---|---|---|---|
| 1-Deoxynojirimycin content (mg/100ml) | 0.2 | 0.2 | 0.2 | 0.2 | 0.4 | 0.4 |
| Magnesium content (mg/100ml) | 0 | 0.05 | 0.1 | 0.2 | 0 | 0.2 |
| Sensory rating | 1 | 3 | 4 | 5 | 1 | 5 |

### Experiment 4: Harsh aftertaste suppression effect of calcium (1)

Different packaged beverages were prepared by adding 1-deoxynojirimycin (produced by FUJIFILM Wako Pure Chemical Corporation; purity: 98%) and calcium lactate pentahydrate (produced by FUJIFILM Wako Pure Chemical Corporation) to pure water so as to give such 1-deoxynojirimycin and calcium contents as shown in Table 4. All of the beverages had a Brix of not more than 0.5.

The prepared packaged beverages were subjected to sensory evaluation by following the same procedure as in Experiment 2 except that this evaluation was conducted based on the assumption that the harsh aftertaste felt in a comparative example which contained 1-deoxynojirimycin in the same amount as each working example but contained no calcium was regarded as 1 point. The results are shown in Table 4. It was found that the harsh aftertaste coming from 1-deoxynojirimycin was suppressed in beverages containing calcium at concentrations of not less than 0.05 mg/100 mL. In sample No. 4-10, which had a calcium concentration of 20 mg/100 mL, the unpleasant taste caused by calcium was prominently felt -- this suggested that the upper limit of the calcium concentration is preferably 15 mg/100 mL. The beverages containing calcium at concentrations of from 0.05 to 15 mg/100 mL were found to be favorable in that the harsh aftertaste coming from 1-deoxynojirimycin was adequately suppressed.

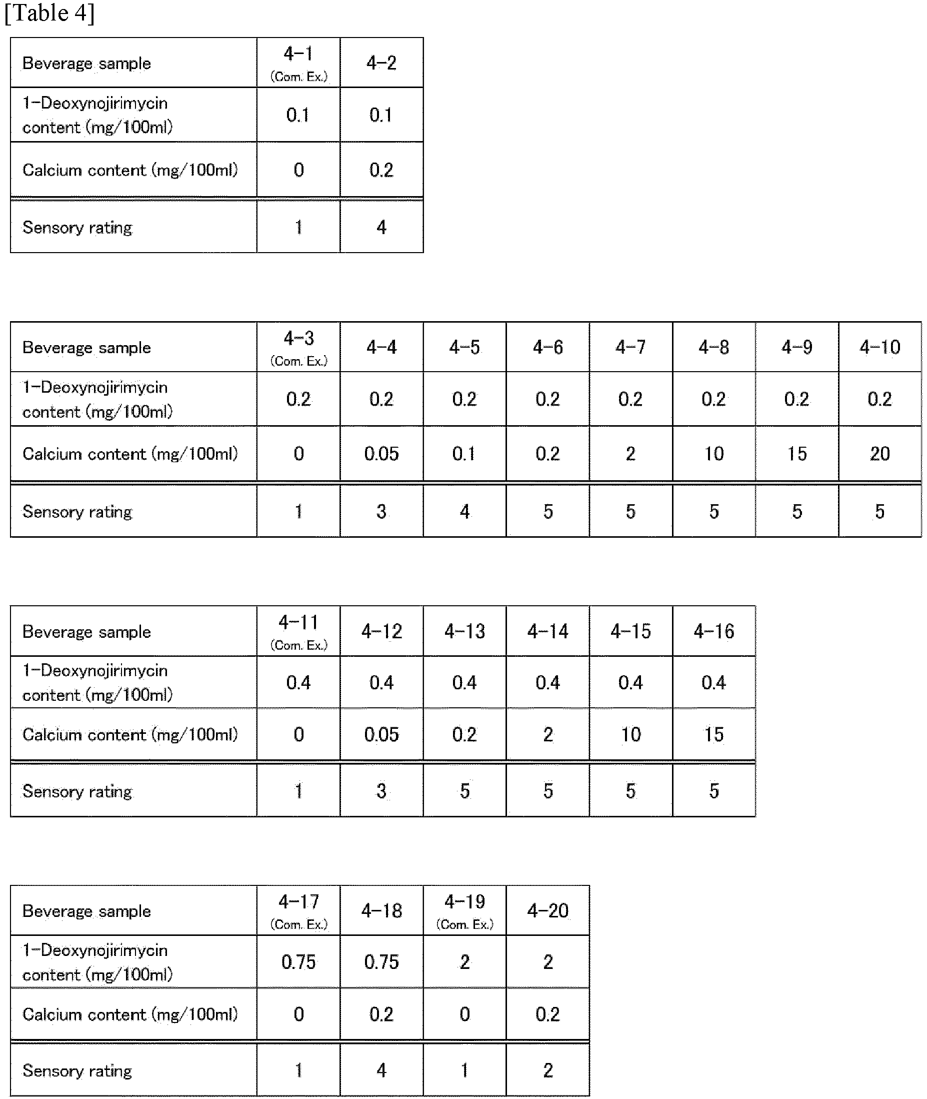

### Experiment 5: Harsh aftertaste suppression effect of combined used of calcium and magnesium

Different beverages were prepared by adding 1-deoxynojirimycin, magnesium sulfate, and calcium lactate pentahydrate to pure water so as to give such 1-deoxynojirimycin, calcium and magnesium contents as shown in Table 5. All of the beverages had a Brix of not more than 0.5.

The prepared packaged beverages were subjected to sensory evaluation by following the same procedure as in Experiment 2 except that this evaluation was conducted by reference to the harsh aftertaste rated as 1 point, which was felt in a beverage sample containing 1-deoxynojirimycin in the same amount as each working example but not containing magnesium or calcium. The results are shown in Table 5. In any cases where magnesium alone or calcium alone was added not only in small amounts but also in large amounts, the harsh aftertaste coming from 1-deoxynojirimycin was reduced to a nearly imperceptible level (rated as 4 points). However, in the cases where both magnesium and calcium were added in combination, the harsh aftertaste was reduced to a completely imperceptible level (rated as 5 points).

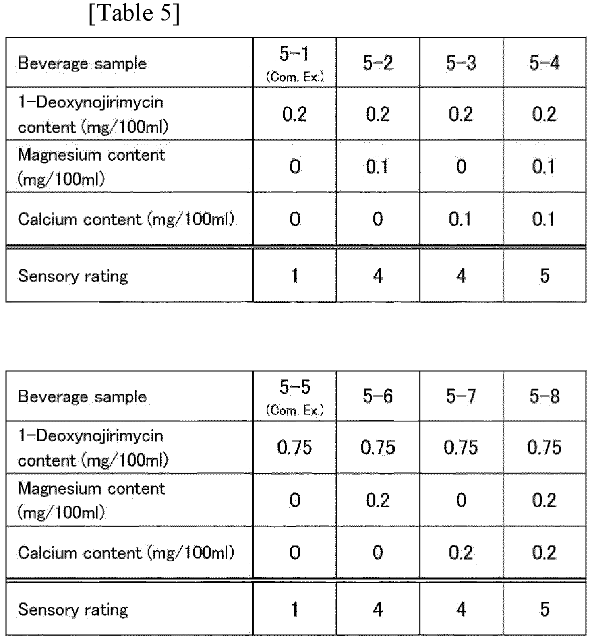

## Claims

1. A beverage comprising 0.1 to 0.75 mg/100 mL of 1-deoxynojirimycin and 0.05 to 15 mg/100 mL of magnesium and/or calcium, and having a soluble solids concentration of not more than 2.0.

2. The beverage according to claim 1, wherein the beverage is a packaged beverage.
